**Europäisches Patentamt**

**European Patent Office**

**Office européen des brevets**

(11) Veröffentlichungsnummer: **0 221 070**
**B1**

(12) **EUROPÄISCHE PATENTSCHRIFT**

(45) Veröffentlichungstag der Patentschrift:
**26.10.88**

(21) Anmeldenummer: **85903814.3**

(22) Anmeldetag: **06.08.85**

(86) Internationale Anmeldenummer:
**PCT/DE 85/00263**

(87) Internationale Veröffentlichungsnummer:
**WO 86/01124 (27.02.86** Gazette 86/5)

(51) Int. Cl.⁴: **B 01 D 17/06,** C 02 F 1/46,
C 02 F 1/24

(54) **VERFAHREN ZUR SPALTUNG VON EMULSIONEN, BEI DENEN WASSER ALS KONTINUIERLICHE PHASE VORLIEGT UND VORRICHTUNG ZUR DURCHFÜHRUNG DES VERFAHRENS.**

(30) Priorität: **11.08.84 DE 3429612**
**09.10.84 DE 3437055**
**12.11.84 DE 3444074**
**26.04.85 DE 3515095**
**20.07.85 DE 3525963**

(43) Veröffentlichungstag der Anmeldung:
**13.05.87 Patentblatt 87/20**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**EP - A - 0 041 480**
**CH - A - 483 882**
**CH - A - 519 444**
**DE - A - 1 803 229**
**DE - A - 2 345 353**
**DE - A - 2 617 996**
**DE - A - 2 627 964**
**FR - A - 2 452 305**
**GB - A - 2 045 803**

(73) Patentinhaber: **RENZLER, Edgar, Siegstrasse 2,**
**D-5000 Köln 40 (DE)**

(72) Erfinder: **RENZLER, Edgar, Siegstrasse 2,**
**D-5000 Köln 40 (DE)**

(74) Vertreter: **Klöpsch, Gerald, Dr.-Ing., An Gross St.**
**Martin 6, D-5000 Köln 1 (DE)**

ACTORUM AG

## Beschreibung

Die Erfindung bezieht sich auf ein Verfahren zur Spaltung von Emulsionen in einer mit Gleichstrom betriebenen Elektrolysezelle mittels initialer Elektrokoagulation, unterstützender Elektrophorese und anschliessender Elektroflotation und auf eine Vorrichtung zur Durchführung des Verfahrens.

Infolge zunehmender Verwendung syntetischer Produkte auf Mineralölbasis, welche biologisch nur schlecht abbaubar sind, wächst die Belastung von Grund- und Oberflächenwasser mit Stoffen wie z.B. Benzine, Dieselkraftstoffe, Heiz- und Schmieröle und grenzflächenaktiven Substanzen.

In Anbetracht der zunehmenden Umweltbelastung hat der Gesetzgeber die Einleitung dieser Schadstoffe in die Gewässer oberhalb bestimmter Konzentrationen unter Strafe gestellt.

Makroemulsionen sind Mehrphasensysteme mit grosser Grenzfläche und nicht verschwindender Grenzflächenspannung, worauf ihre Instabilität beruht. Das heisst diese Emulsionen neigen, um einen möglichst energiearmen Zustand zu erreichen, zur Sedimentation oder Aufrahmung und damit letztlich zur Koaleszenz.

Mikroemulsionen sind jedoch isotrope, thermodynamisch stabile Systeme, deren dispergierte Phase in Form von Teilchen kleiner als 2000 Angström vorliegen. Beim Zusammenwirken entsprechender Molverhältnisse von Peptisierungsmittel, Tensid, Öl und Wasser bilden sie sich spontan.

Die Stabilität von Emulsionen wird durch Zusatz von emulgierend wirkenden, grenzflächenaktiven Stoffen erhöht. Dabei handelt es sich um bipolare Substanzen, welche die Grenzflächenspannung zwischen den Phasen herabsetzen.

Die Gesamtstabilität einer Emulsion wird durch die Summe der Van-der-Waalsschen Anziehungskräfte und die Abstossung der in der Regel negativ aufgeladenen Teilchen durch in der Hauptsache Coloumbsche Kräfte bestimmt.

Koagulation und Flockulation kann durch Aufhebung der Ladung der Teilchen, d.h. des Zetapotentials der emulgierten Teilchen erfolgen. Bewegt sich ein Teilchen, beispielsweise infolge eines angelegten elektrischen Feldes, so wird ein Teil der diffusen Doppelschicht abgestreift und wenn die Energiebarriere zwischen zwei Teilchen klein genug ist, kann alleine durch die Annäherung der Teilchen ein Flockungsvorgang hervorgerufen werden.

Um die vom Gesetzgeber vorgegebenen Normen zu erfüllen, ist die Brechung von Öl/Wasser-Emulsionen zur Vermeidung der Umweltverschmutzung unter allen Umständen erforderlich. Dazu sind einige technische Lösungen bekannt, nämlich in der Hauptsache: Ultrafiltration, Beimischung von Deemulgatoren, Ultraschall, Chemikalienzudosierung, Dialyse, Elektrokoagulation.

Diese Verfahren sind jedoch teilweise mit hohen Investitionen und hohen Betriebskosten verbunden und sind insbesondere für kleinere Mengen hochbelasteter Abwässer unwirtschaftlich. Eine wesentliche Aufgabe dieser Erfindung war daher ein möglichst vielseitig anwendbares und kostengünstiges Verfahren verfügbar zu machen.

Andere technische Trennverfahren zur Produktgewinnung betreffen die Aufbereitung beispielsweise von Erzen, Kohle, Salzen und Abwässern und hier ist eines der bekanntesten Verfahren die Flotation, welche auf die Beobachtungen von W. Haynes (Engl. Patent 488 von 1860) zurückgeht. Diese Flotation wird in manchen Industriezweigen auch in Form der Elektroflotation angewandt, beispielsweise bei der Abscheidung von Silber aus verbrauchten Fotobädern.

Bei dieser Flotation wird in wässerigen Lösungen aus dem Wasser mittels Elektrolyse Wasserstoff und Sauerstoff in Form kleiner Gasblasen erzeugt, also in dem Medium selbst, das der Trennung unterworfen werden soll. Hierbei kann die Trennleistung durch die gleichzeitig einsetzende Koagulation der in der wässerigen Lösung vorliegenden Feststoffe in erheblichem Masse gesteigert werden.

Es ist offensichtlich, dass es gerade auf dem Gebiet der Spaltung von Emulsionen der oben genannten Art einen erheblichen Fortschritt bedeuten würde, wenn es gelänge, die Elektroflotation und die Elektrokoagulation zusammen mit elektrophoretischen Effekten auch auf diese System anzuwenden und diese Emulsionen in fortschirttlichem und energetisch vertretbarem Umfange zu spalten. Dabei wäre es auch möglich, diese Form der Emulsionsspaltung bei der Abtrennung von Organismen aus Nährlösungen zu benutzen und über die gleichzeitig einsetzende Metallauflösung der Lösung die notwendigen Kationen zuzuführen, um die bisherigen Verfahren, nämlich Zentrifugation oder Flotation durch Einblasen von Luft und anschliessender Emulsionsspaltung durch pH-Wert-Absenkung und darauf folgende Zufuhr von Kationen, abzulösen.

Bei bekannten Flotationsverfahren zur Abwasserreinigung werden die erforderlichen Gasbläschen, insbesondere Luftbläschen, durch poröse Tonkörper, Düsen, Rührbegaser, Entspannung von luftgesättigtem Wasser und durch Erzeugung von Gasblasen aus dem Abwasser selbst mittels Elektrolyse erzeugt. Vor der Flotation werden dem Abwasser Flockungsmittel und Flockungshilfsmittel zugesetzt um eine Flockung einzuleiten.

Bei allen Flotationsvorgängen ist die Wirksamkeit der Flotation entscheidend von dem Volumen und der Anzahl der Gasblasen abhängig. Zu grosse Gasblasen und zu starke Begasung führen anstatt zur Flotation von Schwebstoffen zu einer innigen Durchmischung einer an sich zu trennenden Suspension und damit zu dem entgegengesetzten Effekt.

Im Hinblick auf die bei der Aufarbeitung derartiger Emulsionen und mit emulgierten Ölen belasteten Abwässern auftretenden und erhebliche Kosten verursachende Schwierigkeiten besteht in der Technik seit langem ein echtes Bedürfnis dahingehend, ein Verfahren verfügbar zu machen, mit dem es gelingt, Emulsionen der oben beschriebenen Art ohne grossen verfahrenstechnischen Aufwand und ohne die bisher beobachteten Schwierigkeiten zu spalten, und damit auch für kleinere Emulsionsmengen und Abwassermengen eine einfache und sichere Verarbeitung und Entsorgung zu gewährleisten und dabei den gewünschten Erfolg in einem nicht nur kostensparendem, sondern insbesondere auch den jeweiligen Anforderungen entsprechendem Umfang zu erreichen.

Der Erfindung liegt demzufolge die Aufgabe zugrunde, ein Verfahren zur Spaltung von Emulsionen verfügbar zu machen, mit dem dieses soeben geschilderte Bedürfnis befriedigt werden kann, ohne dass nur Fachleute eine solche Emulsionsspaltanlage bedienen können, sondern dass es jedem Laien zumutbar ist, eine solche einfache und betriebssichere Anlage ohne grossen Kostenaufwand zu betreiben.

Die Lösung dieser der Erfindung zugrunde liegenden Aufgabe ist ein Verfahren zur elektrolytischen Spaltung von O/W – Emulsionen in einer mit Gleichstrom betriebenen Elektrolysezelle, das dadurch gekennzeichnet ist, dass die Emulsionen in einer Zelle mit mindestens einem Paket beständiger Elektroden, innerhalb dessen mindestens eine lösliche Metalleinlage angeordnet ist, im sauren bis alkalischen bereich bis pH-Werten von etwa 12 bei einem Stromverbrauch von 0,1 bis 4 Ah/dm³ und einer entsprechenden darauf abgestimmten ausreichenden Verweilzeit koaguliert und flotiert und gegebenenfalls gebildete Aggregate und Agglomerate abfiltriert werden.

Dieses Verfahren kann sowohl kontinuierlich als auch diskontinuierlich durchgeführt werden, wobei der kontinuierlichen Verfahrensführung eine besondere Bedeutung zukommt.

Bei der Durchführung des Verfahrens gemäss der Erfindung hat es sich als vorteilhaft herausgestellt, die Koagulation und Flotation bei pH-Werten im Bereich von 4 bis 6,8 und von 8 bis 12 bei einem Stromverbrauch von 0,1 bis 4 Ah/dm³ und einer Verweilzeit von 5 bis 120 min durchzuführen. Besonders bewährt hat es sich, die Koagulation und Flotation im pH-Bereich von 6,8 bis 8 bei einer Verweilzeit von 2 bis 30 min und bei einem Stromverbrauch von 0,1 bis 2 Ah/dm³ durchzuführen.

Die Koagulation und Flotation wird erfindungsgemäss in einer Zelle durchgeführt, in der innerhalb des Paketes beständiger Elektroden eine oder mehrere lösliche Metalleinlagen angeordnet sind, die mindestens ein im alkalischen Medium ein Hydroxid bildendes Metall aufweisen, insbesondere eine Aluminium- oder Eisenplatte. Das Flächenverhältnis der beständigen Elektroden zur löslichen Metalleinlage sollte erfindungsgemäss 1:0,1 bis 1:60 insbesondere 1:1 bis 1:20 betragen.

Bei der Durchführung des Verfahrens gemäss der Erfindung hat es sich als zweckmässig erwiesen, mit einer zeitlichen Änderung der Gleichstromrichtung von 5 bis 3600 sec zu arbeiten.

Das Verfahren gemäss der Erfindung hat den grossen Vorteil, dass sowohl Koagulant als auch Gas in genau zu dosierender Menge abgeschieden werden können, wobei die Blasengrösse der Gasblasen durch die Oberflächenbeschaffenheit der beständigen Elektroden und durch Materialeigenschaften weit variiert werden kann.

Erfindungsgemäss können als beständige Elektroden beispielsweise solche aus Graphit, Platin, Titan, platiniertem Titan oder Edelstahl Verwendung finden.

Der weitere grosse Vorteil der Erfindung liegt darin, dass für die Einbringung des Koagulationsmittels keine zusätzliche Energie aufgewendet wird und zusätzlich ein bemerkenswerter elektrophoretischer Effekt das Verfahren unterstützt und so die koagulierten Fett- und Ölpartikel infolge der Adsorption an den Gasblasen an der Oberfläche der Elektrolysezelle oder der sonstigen Sammeleinrichtung aufschäumen und zusätzlich noch bedarfsweise eine gleichzeitige Reduktion von beispielsweise Chrom durchgeführt werden kann, wie es in der Abwassertechnik häufig gefordert wird. Insoweit ein Abwasser unerwünscht ist, kann durch Wahl der Elektrodenoberfläche eine Schaumflotation erfolgen und so eine gleichzeitige Entfernung grenzflächenaktiver Stoffe erfolgen.

Eine Vorrichtung zur Durchführung des Verfahrens gemäss der Erfindung ist in den Abbildungen dargestellt, und an diesen soll die Erfindung weiter erläutert werden.

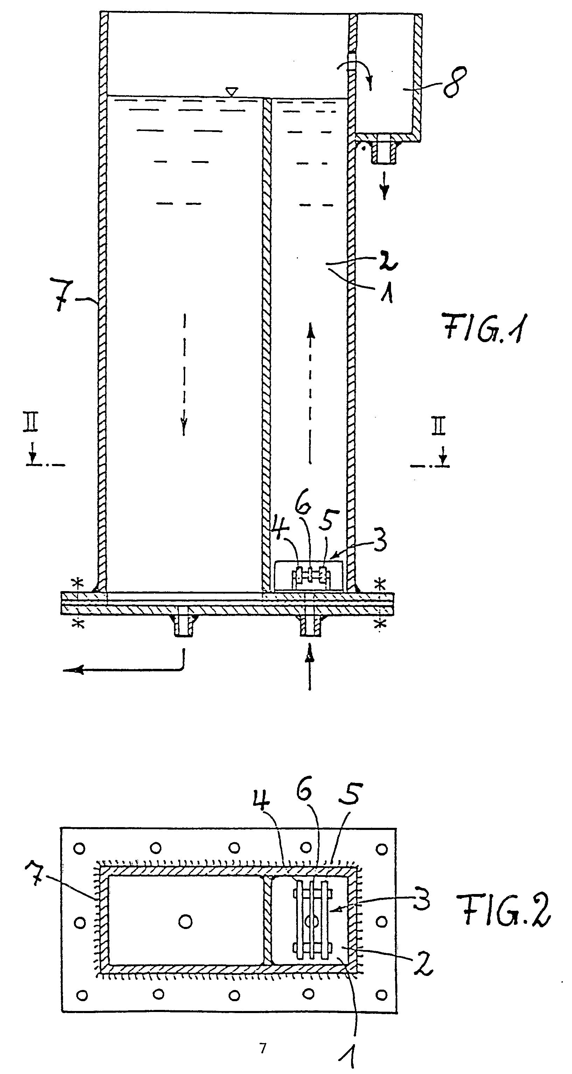

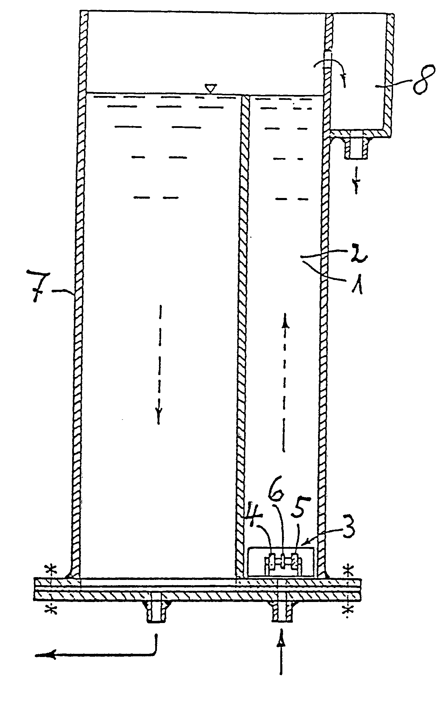

Diese Vorrichtung zur Durchführung des Verfahrens gemäss der Erfindung ist in Fig. 1 im Schnitt dargestellt. Diese Vorrichtung besteht im wesentlichen aus einem Elektrokoagulator (1) und Elektroflotator (2) mit darin angeordnetem Paket (3) der beständigen Elektroden (4) und (5) mit zwischengeschalteter Metalleinlage (6). Der Elektrokoagulator (2) befindet sich in einem Reaktor (7) mit Überlaufsystem (8). Der mit dem Reaktor (7) zusammengefasste Elektrokoagulator (1) ist in Fig. 2 im Schnitt nach Linie II-II von Fig. 1 wiedergegeben.

## Patentansprüche

1. Verfahren zur Spaltung von Emulsionen in einer mit Gleichstrom betriebenen Elektrolysezelle mittels initialer Elektrokoagulation, unterstützender Elektrophorese und anschliessender Elektroflotation, dadurch gekennzeichnet, dass die Emulsionen in einer Zelle mit mindestens einem Paket beständiger Elektroden, innerhalb dessen mindestens eine lösliche Metalleinlage angeordnet ist, im sauren bis alkalischen Bereich bis pH-Werten von etwa 12 bei einem Stromverbrauch von 0,1 bis 4 Ah/dm³ und einer entsprechenden darauf abgestimmten ausreichenden Verweilzeit koaguliert und flotiert und gegebenenfalls gebildete Aggregate und Agglomerate abfiltriert werden.

2. Verfahren nach Anspruch 1, dadurch gekennzeichnet, dass als Metalleinlage innerhalb des Paketes beständiger Elektroden mindestens ein ein Hydroxid bildendes Material verwendet wird, insbesondere eine Aluminium oder Eisenplatte.

3. Verfahren nach Anspruch 1 oder 2, dadurch gekennzeichnet, dass die Koagulation und Flotation bei pH-Werten im Bereich von 4 bis 6,8 und von 8 bis 12 bei einem Stromverbrauch von 0,1 bis 4 Ah/dm³ und einer Verweilzeit von 2 bis 360 min durchgeführt wird.

4. Verfahren nach Anspruch 1 oder 2 dadurch gekennzeichnet, dass die Koagulation und Flotation bei pH-Werten im Bereich von 6,8 bis 8 bei einem Stromverbrauch von 0,1 bis 2 Ah/dm³ und einer Verweilzeit von 2 bis 360 min durchgeführt wird.

5. Verfahren nach Anspruch 1 bis 4, dadurch gekennzeichnet, dass das Flächenverhältnis der beständigen Elektroden zur löslichen Metalleinlage 1:0,1 bis 1:60 insbesondere 1:1 bis 1:20 beträgt.

6. Verfahren nach Anspruch 1 bis 5, dadurch gekennzeichnet, dass mit einer zeitlichen Änderung der Gleichstromrichtung von 5 bis 3600 sec gearbeitet wird.

7. Verfahren nach Anspruch 1 bis 6, dadurch gekennzeichnet, dass bei direktem Einbau des die lösliche Metalleinlage aufweisenden Paketes beständiger Elektroden in eine Kläranlage, einen Ölabscheider oder eine sonstige geeignete Sammeleinrichtung die Verweilzeit der Emulsion in der Sammeleinrichtung 5 bis 1800 min, vorzugsweise 15 bis 360 min und das Verhältnis der einander zugewandten Elektrodenflächen der beständigen Elektroden zur Flüssigkeitsoberfläche der Sammeleinrichtung 1:1 bis 1:60, vorzugsweise 1:2 bis 1:20 insbesondere 1:10 beträgt.

8. Vorrichtung zur Durchführung des Verfahrens nach Anspruch 1 bis 7, gekennzeichnet im wesentlichen durch einen Elektrokoagulator (1) mit integriertem Elektroflotator (2) mit darin angeordnetem Paket (3) der beständigen Elektroden (4) mit zwischengeschalteter Metalleinlage (5).

9. Vorrichtung nach Anspruch 8, dadurch gekennzeichnet, dass der Elektrokoagulator (1) und Elektroflotator (2) mit darin angeordnetem Paket (3) der Elektroden in einen Reaktor (7) mit überlaufsystem (8) integriert und gegebenenfalls ein Filtersystem nachgeschaltet ist.

10. Vorrichtung nach Anspruch 8 oder 9, gekennzeichnet durch eine der Elektrolysezelle nachgeschaltete Beruhigungszelle.


## Claims

1. A process for the demulsification of emulsions in an electrolytic cell powered by direct current by means of initial electrocoagulation, supporting electrophoresis and subsequent electroflotation, characterized in that the emulsions are coagulated and floated in a cell having at least one package of stable electrodes, in which package at least one soluble metal inlay is positioned, in the acidic to alkaline range at pH-values of about 12 with a current consumption of 0.1 to 4 Ah/dm³, and a correspondingly predetermined sufficient dwell time, and that formed aggregates or agglomerates are filtered off optionally.

2. A process according to claim 1, characterized in that at least one material forming a hydroxide, especially an aluminum or an iron plate is used as metal inlay within the package of stable electrodes.

3. A process according to claims 1 or 2, characterized in that the coagulation and flotation are carried out at pH-values in the range of 4 to 6.8 and of 8 to 12, with a current consumption of 0.1 to 4 Ah/dm³, and with a dwell time of 2 to 360 minutes.

4. A process according to claims 1 or 2, characterized in that the coagulation and flotation are carried out at pH-values in the range of 6.8 to 8, with a current consumption of 0.1 to 2 Ah/dm³, and with a dwell time of 2 to 360 minutes.

5. A process according to any one of claims 1 to 4, characterized in that the surface ratio of the stable electrodes to the soluble metal inlay is from 1:0.1 to 1:60, especially from 1:1 to 1:20.

6. A process according to any one of claims 1 to 5, characterized in that the direction of the direct current is changed every 5 to 3600 seconds.

7. A process according to any one of claims 1 to 6, characterized in that when the package of stable electrodes comprising the soluble metal inlay is installed directly into a purification plant, an oil separator, or into another suitable collecting device, the dwell time of the emulsion in the collecting device is from 5 to 1800 minutes, preferably from 15 to 360 minutes, and the ratio of the opposing electrode surfaces of the stable electrodes to the surface of the liquid in the collecting device is from 1:1 to 1:60, preferably from 1:2 to 1:20, and especially preferred from 1:10.

8. An apparatus for carrying out the process according to any one of claims 1 to 7, substantially characterized by an electrocoagulator (1) comprising an integrated electroflotator (2) having positioned therein a package (3) of stable electrodes (4) with interposed metal inlay (5).

9. An apparatus as claimed in claim 8, characterized in that the electrocoagulator (1) and the electroflotator (2) having positioned therein the package (3) of the electrodes are integrated in an reactor (7) having an overflow system (8) and that, if necessary, a filter system is provided for.

10. An apparatus according to claims 8 or 9, characterized by a killing cell positioned after the electrolytic cell.


## Revendications

1. Procédé de scission ou de brisement d'émulsions dans une cellule d'électrolyse fonctionnant sous courant continu, par l'intermédiaire d'une électrocoagulation initiale, d'une électrophorèse de soutien et d'une électroflottation subséquente, caractérisé en ce que l'on soumet les émulsions à une coagulation et à une flottation, dans une cellule comportant au moins un paquet d'électrodes résistantes, à l'intérieur duquel est agencée au moins une insertion métallique soluble, dans un domaine acide à alcalin jusqu'à des valeurs de pH d'environ 12, avec une consommation de courant de 0,1 à 4 Ah/dm³ et une durée de séjour correspondante suffisante réglée sur cette consommation et à une éventuelle séparation par filtration des agglomérés et des agrégats formés.

2. Procédé suivant la revendication 1, caractérisé en ce qu'à titre d'insertion métallique à l'intérieur du paquet d'électrodes résistantes, on utilise au moins un matériau engendrant un hydroxyde, plus particulièrement une plaque d'aluminium ou de fer.

3. Procédé suivant la revendication 1 ou 2, caractérisé en ce que l'on réalise la coagulation et la flottation à des valeurs de pH qui se situent dans la plage de 4 à 6,8 et de 8 à 12 avec une consommation de courant de 0,1 à 4 Ah/dm³ et une durée de séjour de 2 à 360 min.

4. Procédé suivant la revendication 1 ou 2, caractérisé en ce que l'on entreprend la coagulation et la flottation à des valeurs de pH qui se situent dans la plage de 6,8 à 8 avec une consommation de courant de 0,1 à 2 Ah/dm³ et une durée de séjour de 2 à 360 min.

5. Procédé suivant les revendications 1 à 4, caractérisé en ce que le rapport surfacique des électrodes résistantes à l'insertion métallique soluble varie de 1:0,1 à 1:60, plus particulièrement de 1:1 à 1:20.

6. Procédé suivant les revendications 1 à 5, caractérisé en ce que l'on travaille avec une modification de la direction du courant de 5 à 3600 secondes.

7. Procédé suivant les revendications 1 à 6, caractérisé en ce que, lors de l'incorporation directe du paquet d'électrodes résistantes présentant l'insertion métallique soluble dans une installation d'épuration ou de clarification, un séparateur d'huile, ou une quelconque autre installation de collecte ou de captage convenable, la durée de séjour de l'émulsion dans l'installation de captage ou de collecte varie de 5 à 1800 min, de préférence de 15 à 360 min et le rapport des surfaces d'électrodes qui se font mutuellement face des électrodes résistantes à la surface du liquide de l'installation de collecte ou de captage fluctue de 1:1 à 1:60, de préférence de 1:2 à 1:20 et, plus particulièrement, ce rapport est de 1:10.

8. Dispositif pour la mise en œuvre du procédé suivant les revendications 1 à 7, caractérisé, en essence, par un électrocoagulateur (1) avec appareil d'électroflottation intégré (2) dans lesquels est agencé un paquet (3) des électrodes résistantes (4) avec insertion métallique intercalaire (5).

9. Installation suivant la revendication 8, caractérisée en ce que l'électrocoagulateur (1) et l'appareil d'électroflottation (2) dans lesquels est agencé le paquet (3) des électrodes sont intégrés dans un réacteur (7) avec un système de trop-plein (8) et un système de filtration est éventuellement monté en aval.

10. Dispositif suivant la revendication 8 ou 9, caractérisé par une cellule de tranquillisation raccordée en aval de la cellule d'électrolyse.

FIG.1

FIG.2